# EUROPEAN PATENT APPLICATION

(11) **EP 4 140 549 A1**
(43) Date of publication of application: **01.03.2023**
(21) Application number: 22182005.3
(22) Date of filing: 29.06.2022
(51) Int. Cl.: A63F 13/422, A63F 13/5375, A63F 13/67, A63F 13/79, A63F 13/85

(54) **AI ONBOARDING ASSISTANT**

(30) Priority: 25.08.2021 US 202117411986
(71) Applicant: Sony Interactive Entertainment LLC, San Mateo, CA 94404 (US)
(72) Inventor: AZMANDIAN, Mahdi, California, 94404 (US); SHARDA, Manjari, California, 94404 (US)
(74) Representative: D Young & Co LLP

(57) **Abstract**

A method and system for assisting virtual interaction on an entertainment device is disclosed. A user profile that includes user data associated with use of the entertainment device is stored. An indication of a new use by the user of the entertainment device based on the user profile is detected. An activity associated with the new use of the entertainment device is determined. An assistance for the activity associated with the new use of the entertainment device based on the user profile is provided and the user profile is updated based on the provided assistance.

## Description

### BACKGROUND OF THE INVENTION

### 1. Field of the Invention

The present system generally relates to providing virtual assistance to a user. More specifically, the present system relates to assisting a user based on an analysis of the profile information of the user.

### 2. Description of the Related Art

Many different types of individuals of varying experience may engage in the use of an entertainment system. Video game consoles, handheld devices, computers, and virtual reality systems-and the associated digital content accessed and played by the same-may continuously be updated or refreshed to new versions that provide new experiences, as well as challenges in learning and adaptation. For some individuals, learning to play new video games on new hardware may be a frustrating process due not only to lack of familiarity with specific game titles, but also to lack of familiarity in how to use the hardware to execute intended moves and other game interactions. Even highly experienced and expert players may experience some difficulty or awkwardness during transitions to new or unfamiliar systems, devices, and game titles. Muscle memory and force of habit in relation to old or familiar systems and titles may not necessarily translate, and such users may end up making a variety of input errors that lead to unintended in-game moves and interactions.

Entertainment systems and new media content typically provide only cursory introductions to a user, such as a quick setup guide on a new console or introductory tutorials in a video game. Depending on the user's experience level and the extent of the materials, such material may daunting in terms of volume and complexity to a user that infrequently interacts with such a device or content, thereby only serving to further confuse, frustrate, and/or overwhelm the user.

Therefore, there is a need in the art to provide improved systems and methods for personalized onboarding assistance that may guide a user through various aspects of a new entertainment system and content on such a system as to familiarize, increase comfort, and simplify the entry of a user into a new experience.

### SUMMARY OF THE CLAIMED INVENTION

A method for assisting virtual interaction on an entertainment device is disclosed. The method includes storing a user profile that includes user data associated with use of the entertainment device. The method also includes detecting an assistance trigger by the user of the entertainment device. The method also includes determining an activity associated with the assistance trigger. Assistance content regarding the activity may be identified as associated with the assistance trigger, and the assistance content may be personalized based on the user profile. The user profile may further be updated based on the provided assistance content.

A system for assisting virtual interaction on an entertainment device is disclosed. The system includes a memory and a processor that executes instructions stored in memory, wherein execution of the instructions by the processor stores a user profile that includes user data associated with use of the entertainment device. The execution of the instructions by the processor also detects an assistance trigger by the user of the entertainment device. The execution of the instructions by the processor also determines an activity associated with the assistance trigger. Assistance content regarding the activity may be identified as associated with the assistance trigger, and the assistance content may be personalized based on the user profile. The user profile may further be updated based on the provided assistance content.

A non-transitory computer-readable storage medium, having embodied thereon a program executable by a processor to perform a method for assisting virtual interaction on an entertainment device disclosed. The method includes storing a user profile that includes user data associated with use of the entertainment device. The method also includes detecting an assistance trigger by the user of the entertainment device. The method also includes determining an activity associated with the assistance trigger. Assistance content regarding the activity may be identified as associated with the assistance trigger, and the assistance content may be personalized based on the user profile. The user profile may further be updated based on the provided assistance content.

### BRIEF DESCRIPTION OF THE DRAWINGS

FIG. 1 illustrates an exemplary network environment in which a system for providing personalized onboarding assistance based on a user profile may be implemented.
FIG. 2 is a flowchart illustrating an exemplary method for providing personalized onboarding assistance based on a user profile.
FIG. 3 illustrates an exemplary controller input guide that may be provided as part of personalized onboarding assistance.
FIG. 4 illustrates an exemplary implementation of a system for providing personalized onboarding assistance based on a user profile within an in-game environment.
FIG. 5a-5f illustrate exemplary screenshots that may be provided during use of a system for providing personalized onboarding assistance in relation to viewing and adding peers as social connections.
FIG. 6a-6b illustrate exemplary screenshots that may be provided during use of a system for providing personalized onboarding assistance in relation to purchasing media content from an online store.
FIG. 7a-7b illustrate exemplary screenshots that may be provided during use of a system for providing personalized onboarding assistance in relation to making recommendations of new media content based on media content in a library of a user.
FIG. 8 illustrate exemplary screenshots that may be provided during use of a system for providing personalized onboarding assistance in relation to making recommendations of new media content based on purchase history of peers of a user.
FIG. 9 is a block diagram of an exemplary electronic entertainment system.

### DETAILED DESCRIPTION

Methods and systems for providing personalized onboarding assistance are disclosed. A user profile that includes user data associated with use of the entertainment device is stored. An assistance trigger by the user of the entertainment device is detected. An activity associated with the assistance trigger is determined. Assistance content regarding the activity may be identified as associated with the assistance trigger, and the assistance content may be personalized based on the user profile. The user profile may further be updated based on the provided assistance content.

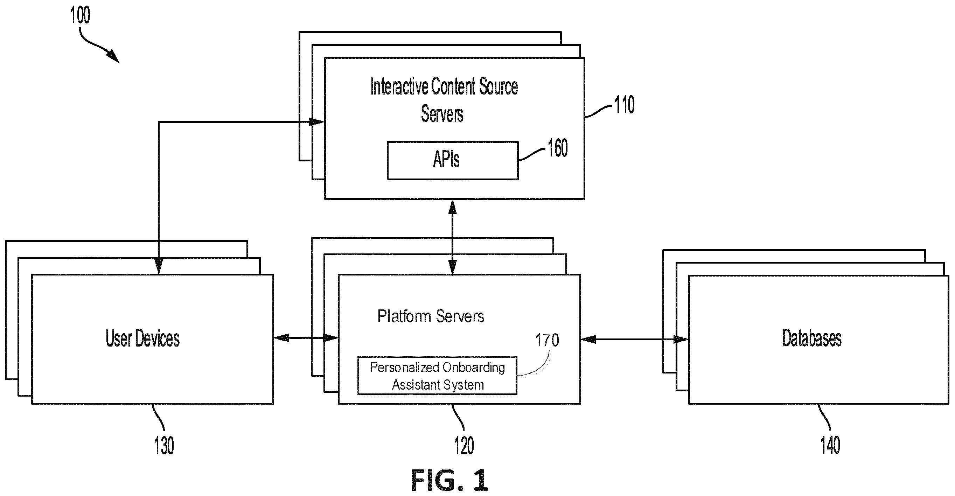

FIG. 1 illustrates an exemplary network environment 100 in which a system for providing personalized onboarding assistance based on a user profile may be implemented. The network environment 100 may include one or more interactive content servers 110 that provide streaming content, such as interactive video, video games, etc., one or more platform servers 120, one or more user devices 130, and one or more databases 140.

Interactive content servers 110 may maintain, stream, and host interactive media available to stream or download on a user device 130 over a communication network. Such interactive content servers 110 may be implemented in the cloud, such as one or more cloud servers. Each media may include one or more sets of object data that may be available for participation with by a user, such as viewing or interacting with an activity of the content. Data about the object shown in the media may be stored by the media streaming servers 110, platform servers 120 and/or the user device 130.

The platform servers 120 may be responsible for communicating with the different interactive content servers 110, databases 140, and user devices 130. Such platform servers 120 may be implemented on one or more cloud servers. The streaming servers 110 may communicate with multiple platform servers 120, though the media streaming servers 110 may be implemented on one or more platform servers 120. The platform servers 120 may also carry out instructions, for example, receiving a user request from a user to stream streaming media, such as games, activities, video, podcasts, User Generated Content ("UGC"), and publisher content. The platform servers 120 may further carry out instructions, for example, for streaming the streaming media content titles.

The streaming media and the associated at least one set of object data may be provided through an application programming interface (API) 160, which allows various types of media streaming servers 110 to communicate with different platform servers 120 and different user devices 130. API 160 may be specific to the particular computer programming language, operating system, protocols, etc., of the media streaming servers 110 providing the streaming media content titles, the platform servers 120 providing the media and the associated at least one set of object data, and user devices 130 receiving the same. In a network environment 100 that includes multiple different types of media streaming servers 110 (or platform servers 120 or user devices 130), there may likewise be a corresponding number of APIs 160.

The user device 130 may include a plurality of different types of computing devices. For example, the user device 130 may include any number of different gaming consoles, mobile devices, laptops, and desktops. In another example, the user device 130 may be implemented in the cloud. Such user device 130 may also be configured to access data from other storage media, such as, but not limited to memory cards or disk drives as may be appropriate in the case of downloaded services. Such devices 130 may include standard hardware computing components such as, but not limited to network and media interfaces, non-transitory computer-readable storage (memory), and processors for executing instructions that may be stored in memory. The user devices 130 may include various hardware sensors for detecting user interactions, such as a camera, microphone, haptic feedback input mechanisms, and gyroscopes. Hardware sensors in user devices may be used to capture user response and feedback, such as gestures, speech, and facial expressions. These user devices 130 may also run using a variety of different operating systems, such as iOS or Android. The user devices 130 may also run a variety of applications or computing languages, such as C++ or JavaScript. The user device may include one or more devices associated with a user or a user device capable of displaying on one or more screens.

The databases 140 may be stored on the platform server 120, the media streaming servers 110, on the same server, on different servers, on a single server, across different servers, or on any of the user devices 130. Such databases 140 may store the streaming media and/or an associated set of object data. Such streaming media may depict one or more objects or activities that a user can participate in or interact with. One or more user profiles may also be stored in the databases 140. Each user profile may include information about the user, such as user progress in an activity and/or media content title, user ID, associated game characters, teammates, competitors, in-game levels achieved, skill level, scores, game metrics, user devices, media titles, game settings, etc.

A personalized onboarding assistant system 170 may be stored on and executed from the databases 140, user devices 130, platform servers 120 or interactive content servers 110. Each user profile may track the use of a personalized onboarding assistant system 170 and store user onboarding progress and preferences for information delivered by a personalized onboarding assistant system 170 on databases 140. A personalized onboarding assistant system 170 may be engaged by a user on a user device 130 utilizing a digital display such as a television, projector, monitor, smartphone, virtual reality (VR) head-mounted display or handheld device, and may incorporate one or more physical input devices such as a touchscreen, remote, controller, joystick, or mouse and keyboard.

In some implementations, personalized onboarding assistant system 170 may also refer to user profiles of other users that are identified as connected to or similar to a current user. For example, contacts or friends of the user (as identified through express indication by the user or based on tracked chat or other communications) may have more developed user profiles if they are more experienced, provided more data, or are otherwise associated with more data from one or more sources. The profiles of such contacts or friends may be used to predict likely preferences or tendencies of the user. In addition, other users may have demonstrated similar gameplay characteristics (*e*.*g*., same gameplay titles, same level of scores or other metrics), such that their profiles may be used to predict the current user's likely trajectory of gameplay. Personalized onboarding assistant system 170 may further continually update the user profile and refine predictions and insights over time as new data is received that confirms or belies such predictions. Different patterns may emerge and be detected by personalized onboarding assistant system 170 as to gameplay by the user in relation to different types of game titles and in-game conditions. Such patterns may be used to update the user profile and used to further personalize onboarding assistance to the user. Thus, personalized onboarding assistant system 170 may have an updated user profile to use in customizing in-game assistance in a way that relevant and useful to the user.

Personalized onboarding for one user may therefore be presented in a manner that is different than personalized onboarding for another user. Moreover, because a user may demonstrate different habits and tendencies from one title to the next, the personalized onboarding for the user may further be presented differently from title to title. For example, the user may have a one circle of friends for one game genre or title *(e.g.,* first-person shooter games) and a different circle of friends for a different game genre or title *(e.g.,* music or dance games). In some embodiments, personalized onboarding may be provided by way of a virtual character in the virtual environment that may demonstrate player inputs (combos), as well as performing in-game moves and maneuvers. The character may also act as a tour guide, tutor, guide, or other type of assistant within the virtual environment. Thus, the personalized onboarding for the former may utilize different audio-visuals than personalized onboarding the latter.

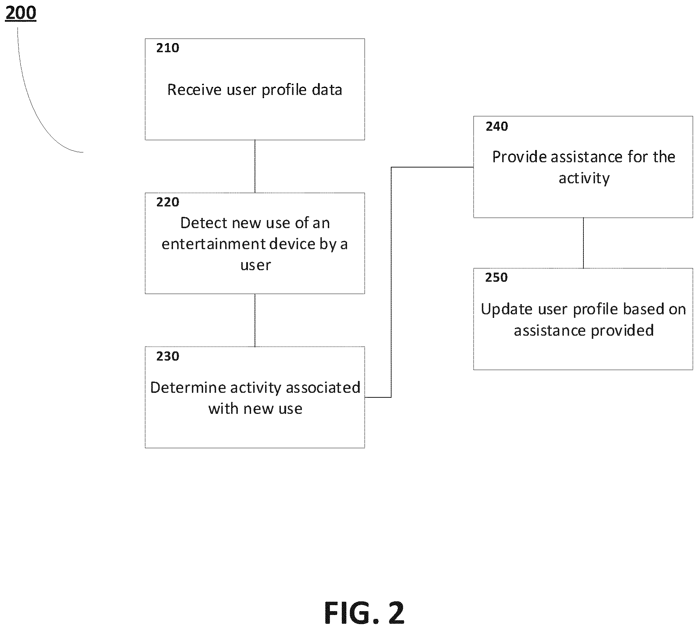

FIG. 2 is a flowchart illustrating an exemplary method 200 for providing personalized onboarding assistance based on a user profile. The steps identified in FIG. 2 are exemplary and may include various alternatives, equivalents, or derivations thereof including but not limited to the order of execution of the same. The steps of the process of FIG. 2 and any alternative similar processes may be embodied in hardware or software including a computer-readable storage medium including instructions executable by the likes of a processor in a computing device. The exemplary process illustrated in FIG. 2 may be performed repeatedly during the use of an entertainment system.

In step 210, a user profile data is received by a personalized onboarding assistant system 170. The user profile data may include information on historic profile use of an entertainment system, games played, or activities of the user on the user device 130. User profile data may include legacy system data, such as a user that previously interacted with a related entertainment system to the current user device 130. User profile data may also include information regarding media content and activities previously engaged by the user, such as a record of media content previously engaged by the user, global purchase history of media content from an online store for the user, the purchase history of media content by peers of the user, preferences related to receiving assistance from a personalized onboarding assistant system 170 for the user, and a record of inputs received from the user of the entertainment device. The user profile may track the interaction and progression of the user with the personalized onboarding assistant system 170 after the user has initially engaged with the entertainment system or media title. Upon creation of a new user profile, data for the profile of the user may include no historic use of an entertainment system, or specific media content, or specific activity.

In step 220, an assistance trigger may be detected by the personalized onboarding assistant system 170. The assistance trigger may include a user initially engaging with an entertainment system, a specific media content file, or specific activity where the user profile has no recorded data of previous interaction with the system, media, or activity. Each entertainment system, media content file, or activity the user engages in may be tracked separately by the user profile.

Other types of assistance triggers may indicate a lack of familiarity with the system hardware, content title, or other aspects of the virtual environment. For example, such assistance triggers may include repeated key presses, series of variations on the same combo key presses, verbal indicators, lack of progress over time, in-game wandering, and other indicators. Detection of an assistance trigger may also be based on an express request by the user for help or assistance, whether as a verbal *(e.g.,* "Help!" or "This is hard!") or written request *(e.g.,* chat message to a friend) or as selected from a menu of options.

In one embodiment, the user profile may include no data regarding the historic use of an entertainment system or related legacy entertainment system. A user with no such data may be detected as a new user to the system entirely. The new user to an entertainment system may be determined by the user creating a new user profile. For example, a user may interact with a Sony PlayStation5^{®} and create a new user profile with no existing PlayStation Network profile, related entertainment system, or media content data available. In this case, the user may be detected as a new user initially engaging with the system. In another instance, a user profile may include data associated with a related legacy entertainment system and may not include profile data associated with a current entertainment system. For example, the user may have previously engaged in the use of a Sony PlayStation4^{®} and may have an associated PlayStation Network profile and data. Such a user may interact with a Sony PlayStation5^{®} using an existing profile and be detected as a user with experience on a Sony PlayStation4^{®} system but may be determined to be a new user to a Sony PlayStation5^{®} system.

In another embodiment, the user profile may have no data associated with a specific media content file. The user may initially engage with a media content file from any source such as streamed or downloaded content from interactive content servers 110, or from a physical media device, such as a USB hard disk, Solid State Drive (SSD), Hard Disk Drive (HDD), Blu-Ray disc, DVD-ROM, other optical disc or plug-n-play storage device. An initial interaction with a new media content file may be recorded and stored in the user profile. For example, the user may stream a TV program from a streaming service on a cloud server or from interactive content servers 110. Upon detecting the initial user input request to view the program, the personalized onboarding assistant system 170 may detect an assistance trigger associated with a media content title. The user profile may be updated to reflect interaction with the media content, storing information and metadata, such as the title, genre, and duration associated with the content.

In a different embodiment, the user profile may have no data associated with a specific activity related to an entertainment system. Activities related to an entertainment system may include but are not limited to interactions such as searching for and adding peers on a network as social contacts, accessing and searching an online store of media content for purchase, playing a video game, streaming media content, and customizing the user profile by adding interests or descriptions about a user.

In step 230, a personalized onboarding assistant system 170 may determine an activity associated with the assistance trigger. When no data is present in the user profile for an activity, the personalized onboarding assistant system 170 may determine the activity the user may be attempting to initiate based on the media title and user profiles of other users that have interacted with the media title. Initial engagement with the activity may be recorded in the user profile and received by the personalized onboarding assistant system 170 including data identifying the activity associated with the assistance trigger. The personalized onboarding assistant system 170 may identify that the user is currently interacting with a specific media content title at a specific location *(e.g.,* level, tier, portion) within an associated virtual environment. Such interaction data may be used to filter available activities to identify the activity with which the user may be struggling. In some implementations, the personalized onboarding assistant system 170 may present a filtered set of activities as an overlay menu to the user, thereby allowing the user to access different assistance content from within the virtual environment.

In one embodiment, a user may require assistance browsing an online store. The user may access an online store and the user profile may have no previous data associated with the use of the online store. The user may browse multiple pages of media content in the online store without selecting any one content to view more details about the content or to purchase the content. Further, the user may continue to navigate back to the home screen of the online store and attempt to browse different categories or sections of the online store without making any selection. In this case, the user may be unfamiliar with the sections of content on the online store and may not be able to locate content they are seeking. The personalized onboarding assistant system 170 may determine the user is shopping in the online store for the first time and may require assistance locating content.

In another embodiment, a user may require assistance adding peers as social contacts. The user may access a list of peers added as social contacts of the user on the network, or a "Friends" list. The user may navigate to the friends list and may perform activities such as searching for peers and receiving no results from the search text the user has entered. The personalized onboarding assistant system 170 may determine the user requires assistance correctly entering a profile name when searching for friends or the user requires assistance understanding the workflow to search and add a peer as a friend.

In a different embodiment, a user may require assistance interacting with a game. The user may acquire the game from an online store and may initially access the game on the entertainment system. The user may not understand how to launch the game application or know where the downloaded game is located and may navigate to different sections of the entertainment system or may repeatedly return to the home screen without launching the game. The personalized onboarding assistant system 170 may determine the user navigating the entertainment system without launching an application may require assistance in locating the game application that was recently purchased. Alternatively, the user may locate and launch the game application, however, the user may remain idle on the title screen of the game application. The personalized onboarding assistant system 170 may determine the user requires various different assistance in playing the game or gaining familiarity with the entertainment system input device.

In step 240, the personalized onboarding assistant system 170 may provide assistance content to the user based on a selected workflow associated with the assistance trigger detected at an entertainment system. The assistance content for the activity may include various on-screen displays, audio-visual content, textual annotations, video clips, etc. Each screen display may be configured and presented in accordance with the user profile. For example, a novice user that requires more remedial assistance may be presented with different type and volume of information than a more experienced user that only requires a usage tip to navigate a new system or title. Conversely, expert users may be more interested in being presented with minutia regarding complex combos and game theory, while new users may be overwhelmed by the same. The selection of the type and volume of information to present to a current user - as well a how such information is presented within the current environment-may be based on the user profile. Similarly, users with different social circles and habits may be provided with different advice and guidance regarding how to connect, compete, spectate, and otherwise interact with other users in the virtual environment.

Following the activity being determined in step 230, the personalized onboarding assistant system 170 may provide an on-screen display prompt to the user to begin assistance related to the assistance trigger detected at an entertainment system, media content, or activity. The prompt displayed to the user may require a user input to begin providing assistance content, suspend future assistance, or exit assistance currently being provided.

In step 250, the user profile may be updated based on assistance content provided by the personalized onboarding assistant system 170. Based on the type of assistance provided and the outcome of providing assistance content in step 240, the user profile may be updated regarding the completion of the activity and a user preference for receiving assistance for the activity. User preference for receiving assistance for the activity may include completing an activity successfully along with the assistance, suspending assistance, or exiting assistance mode in which the assistance content is presented. Completing an activity successfully after the assistance content was provided may indicate the assistance content was useful, and the personalized onboarding assistant system 170 may continue to provide assistance content with the next sequence of the workflow associated with the activity. Suspending assistance mode may be temporary in response to user input and may include pausing assistance mode related to a specific activity. The personalized onboarding assistant system 170 may provide different assistance content for the same activity when suspension of assistance mode for the activity has been indicated by a user input. For example, different assistance content may be provided for the same activity but at a different initial point, may utilize different presentation techniques of the assistance content, such as visual highlighting or audio narration as opposed to textual assistance content, or may provide additional clarification to each step. User preferences in relation to assistance content may further include settings regarding exiting assistance mode, such as cancelling assistance mode related to an activity indefinitely. The personalized onboarding assistant system 170 may cease providing assistance content for the exited activity, but may provide different assistance content for a new activity. Completing, suspending, or exiting assistance mode may be recorded and stored in a user profile.

For example, a user may be provided with an on-screen display including a text overlay guiding a user to input a series of commands to begin playback of a media content file. Following an on-screen display and successful execution of playback of the media content, a personalized onboarding assistant system 170 may update a user profile to reflect an activity has been completed successfully. Successful completion of an activity related to assistance content provided by a personalized onboarding assistant system 170 may be used to update a user profile regarding limiting or eliminating further assistance content *(e.g.,* or subsequently providing more advanced assistance content) provided to a user for the entertainment system, related media content file, or related activity. Further, a user may select to suspend future assistance modes related to playback of a media content file, and the request for suspension may be recorded in a user profile. A user may also select to exit the guided prompts provided by a personalized onboarding assistant system 170 before completing related steps to execute playback of a media content file.

Steps 210-250 may be repeated by a personalized onboarding assistant system 170 each time a user interacts with the entertainment system. The personalized onboarding assistant system 170 may automatically terminate providing assistance content upon detection that a user input previously exited or suspended assistance related to an activity. Moreover, the personalized onboarding assistant system 170 may resume assistance mode associated with an activity which was exited or suspended upon detection of frustration from a user of an entertainment system, media content file, or activity. Various hardware sensors may detect user frustration in a variety of ways. In one example, a camera may record facial expressions, hand gestures, and body language associated with negative emotion. In another example, a microphone may record user speech associated with negative emotion or words spoken at an increased volume. In yet a different example, a haptic feedback device or gyroscope embedded in a controller may receive rapid changes in input associated with banging, throwing, shaking, or otherwise turbulent motions and inputs associated with negative emotion.

User frustration by input may also be detected by a personalized onboarding assistant system 170 based on user input related to software interaction with an entertainment system, media content file, or activity. For example, a user may receive assistance from a personalized onboarding assistant system 170, choose to exit the assistance, and may further immediately close a game application. Closing an application immediately after exiting assistance from a personalized onboarding assistant system 170 may be identified as a user frustration with a game. In another example, a user may be navigating an online store or social contact list, have received and exited assistance related to an online store or social contact list, and may repeatedly backtrack to a menu within the store or social contact list. User input received to repeatedly access the same menu may be identified by the personalized onboarding assistant system 170 as a user frustration with locating an activity related to an online store or contact list.

In some embodiments, any combination of hardware sensor data and input data related to software of an entertainment system may be tracked by the personalized onboarding assistant system 170 to identify user frustration. For example, during the play of a game, a user may fail to complete an activity within the game. During a user failure to complete an in-game activity, a user may be recorded by a camera and may be recognized as looking down at a controller or input device. Simultaneously to the camera recording a user, the personalized onboarding assistant system 170 may detect a user has not input any command to the controller or input device. Such a combination of camera data and input data may signify a user is frustrated and may be confused how to operate a device or perform an activity and may require assistance related to the game or input device.

Upon detection of frustration from the user, the personalized onboarding assistant system 170 may override preferences in the user profile regarding assistance content that the user previously terminated. The personalized onboarding assistant system 170 may display assistance content with additional steps and greater detail than the assistance content that the user had previously exited. For example, the personalized onboarding assistant system 170 may provide a tutorial to the user for adding peers as social contacts, or adding friends. The initial tutorial provided by the personalized onboarding assistant system 170 may include on-screen text and highlights to the navigation items required to add a friend. After a user has exited the tutorial assistance, and further frustration of the user is detected, the personalized onboarding assistant system 170 may resume the tutorial for adding peers as friends. New assistance displayed by the personalized onboarding assistant system 170 may provide on-screen displays of controller input required to navigate the menu for adding peers. Further, the personalized onboarding assistant system 170 may disable other menu options except the associated menu options in the guided assistance for the workflow to add peers as friends, allowing the user to complete the workflow with greater ease by removing possible mistakes, such as selecting an incorrect menu.

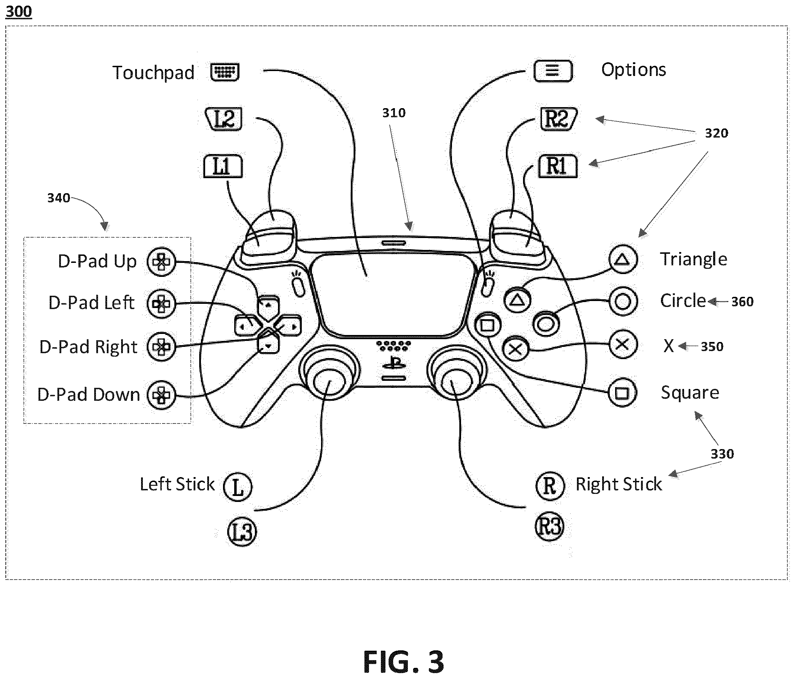

FIG. 3 illustrates an exemplary controller input guide 300 that may be provided as part of personalized onboarding assistance. An assistance trigger may include indications that a user is unfamiliar with an input device, such as a game controller *(e.g.,* repeated key presses). The personalized onboarding assistant system 170 may provide an on-screen display of a controller and controller functionality 300 on a user device 130 to familiarize a user with button placement, use, and configuration of a controller. Assistance to a user may include an image or video of a controller 310 that a user may engage with to operate an entertainment system accompanied by text or audio description of each input functionality. Indicators for input functionality of a controller may be displayed such as button locations and button names 320 and button labels 330. Input indicators and explanation text provided by the personalized onboarding assistant system 170 may be accentuated or emphasized to draw attention of a user to a particular area of a controller during an explanation, such as highlighting a button with a bright or noticeably different color compared to the controller or background of the display and darken or grey out areas that are not relevant.

In one embodiment, the personalized onboarding assistant system 170 may guide a user through each input mechanism and the function of an input on a controller for an entertainment system. For example, basic controls for navigating an entertainment system menu may be provided, such as the personalized onboarding assistant system 170 instructing a user to press up, down, left, or right on a directional pad (d-pad) 340 to move an on-screen cursor, pressing an X button 350 to select an option, or pressing Circle button 360 to cancel or go to a previous menu.

In another embodiment, the personalized onboarding assistant system 170 may guide a user through specific input mechanisms and functions associated with a media content file or activity. In one example, the personalized onboarding assistant system 170 may display an on-screen controller input guide upon an initial interaction with a new media content file by a user. Such an on-screen controller input guide may include input functionality for a player-character in a game overlayed with current gameplay. The same on-screen controller input guide may be displayed upon detection of user frustration with the media content.

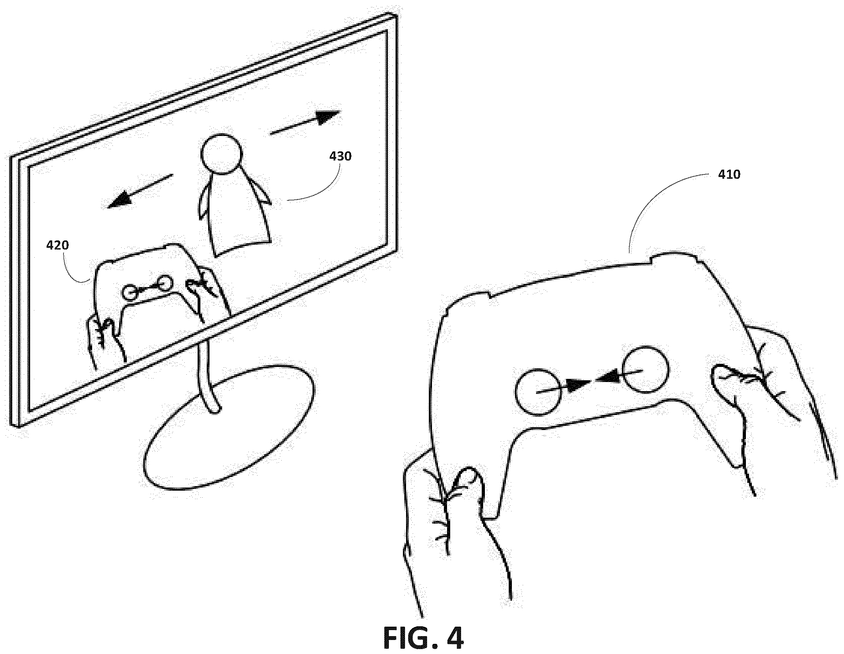

FIG. 4 illustrates an exemplary implementation of a system for providing personalized onboarding assistance based on a user profile within an in-game environment. In addition to on-screen text and images, the personalized onboarding assistant system 170 may provide interactive tutorials and training to familiarize a user with an input device, media content, or activity of an entertainment system. In one embodiment, a user may operate a controller 410 to manipulate camera angle and move an avatar in an interactive media content, such as a game. The personalized onboarding assistant system 170 may provide a visual representation of a user operating a controller 420 to perform a function of gameplay concurrent with active gameplay or training, such as tilting a left analog stick to the right to move an avatar to the right in a game world and tilting a right analog stick to the left to change camera angle to the left orbiting around an avatar. A visual representation 420 may first simulate the required input by a user on-screen 430 and display an example of an avatar and a camera being operated separately and in tandem. A visual representation 420 may then track a user input to display to a user when the training is performed correctly by altering the on-screen display for controller input based on actual user input to a controller 410.

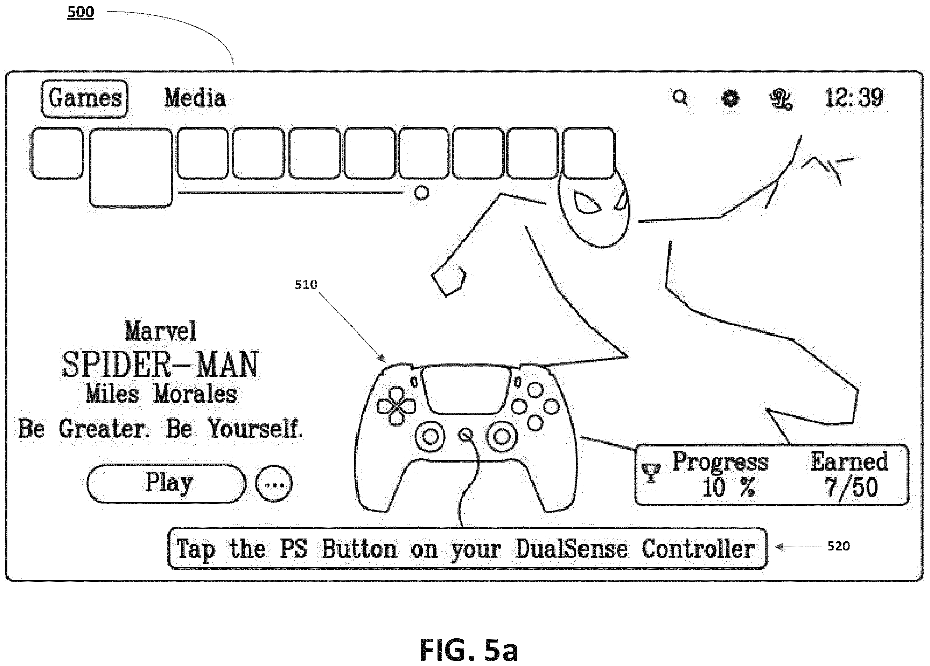

FIG. 5a-5f illustrate exemplary screenshots that may be provided during use of a system for providing personalized onboarding assistance in relation to viewing and adding peers as social connections. The personalized onboarding assistant system 170 may suggest adding peers of a user on an entertainment device as social connections. Various indicators may inform the personalized onboarding assistant system 170 to suggest adding peers of a user as social connections, such as peers previously connected to a user profile by a linked account on a different social network, recent interaction by a user with peers in a game, peers with similar media content interaction and purchase history, and peers of peers a user has added as a social connection previously. The personalized onboarding assistant system 170 may guide a user through each step in the process of searching and adding peers on an entertainment system.

In FIG. 5a, a home screen dashboard 500 of an entertainment system on a user device 130 is displayed. The personalized onboarding assistant system 170 may overlay an input diagram 510, such as a controller associated with navigation of an entertainment system. Further, the personalized onboarding assistant system 170 may provide tutorial text 520 linked to a controller input diagram 510, visually guiding a user to begin the process for adding a peer.

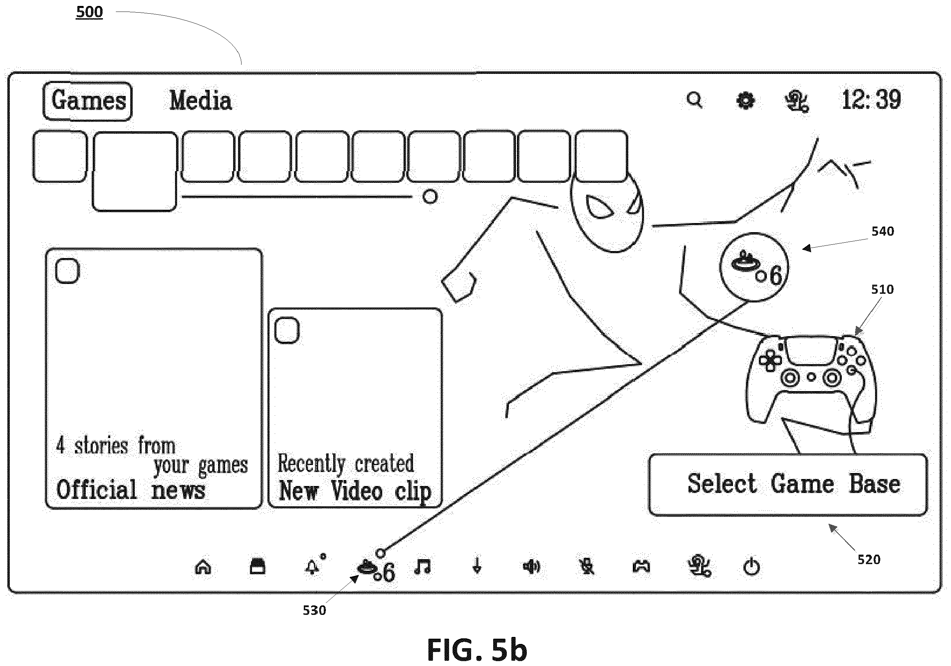

In FIG. 5b, a user may progress to the next step in adding a peer as a contact after following along with the prompt provided by the personalized onboarding assistant system 170 and providing the required input, viewing a different display of the dashboard 500. The personalized onboarding assistant system 170 may highlight the next step in the process to draw attention of a user to the navigation item 530 associated with adding a peer. In one example, the personalized onboarding assistant system 170 may provide a call-out highlight 540 by drawing a line from a navigation item 530 to an image of the same navigation item in an increased size and resolution. Further, the personalized onboarding assistant system 170 may adjust position and size of a controller input diagram 510 to avoid obstructing navigation items on a dashboard. A controller input diagram 510 may be updated with a pointer to the required input for selecting a navigation item, and updated tutorial text 520 reflecting instructions for selection and confirmation of a navigation item.

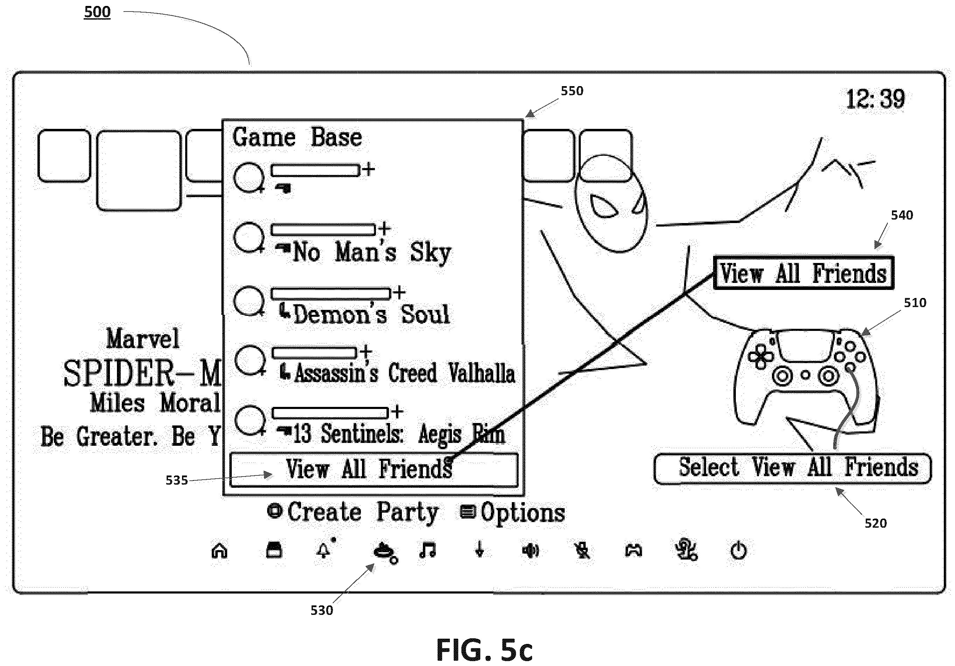

In FIG. 5c, a social sub-menu 550 may expand and overlay a dashboard 500 upon selection of a navigation item by a user, as instructed by the personalized onboarding assistant system 170 in FIG. 5b. Like assistance provided for selecting a navigation item 530, the personalized onboarding assistant system 170 may again highlight the newly exposed navigation item 535 from the expanded sub-menu 550. A controller input diagram 510 may be updated with changes to a required input for selection of a navigation item, and tutorial text 520 may be updated to reflect instructions for selecting the newly exposed navigation item 535 from sub-menu 550. In one example, tutorial text 520 and controller input diagram 510 may be updated in real-time as a user is navigating the dashboard 500 and sub-menu 550. For instance, tutorial text 520 may initially appear in FIG. 5c to instruct a user with guidance such as "Press Up on the D-Pad, or tilt the Left Analog Stick Up to move to the option for View All Friends". As a user inputs commands to a controller, the tutorial text may be updated automatically and instantly to reflect cursor position and correctness of instructions followed. Upon highlighting the correct option for selection, tutorial text 520 may be updated to instruct "Select View All Friends by pressing X" confirming the user has highlighted the intended navigation item and further guiding a user to the highlighted button for selection on a controller input diagram 510.

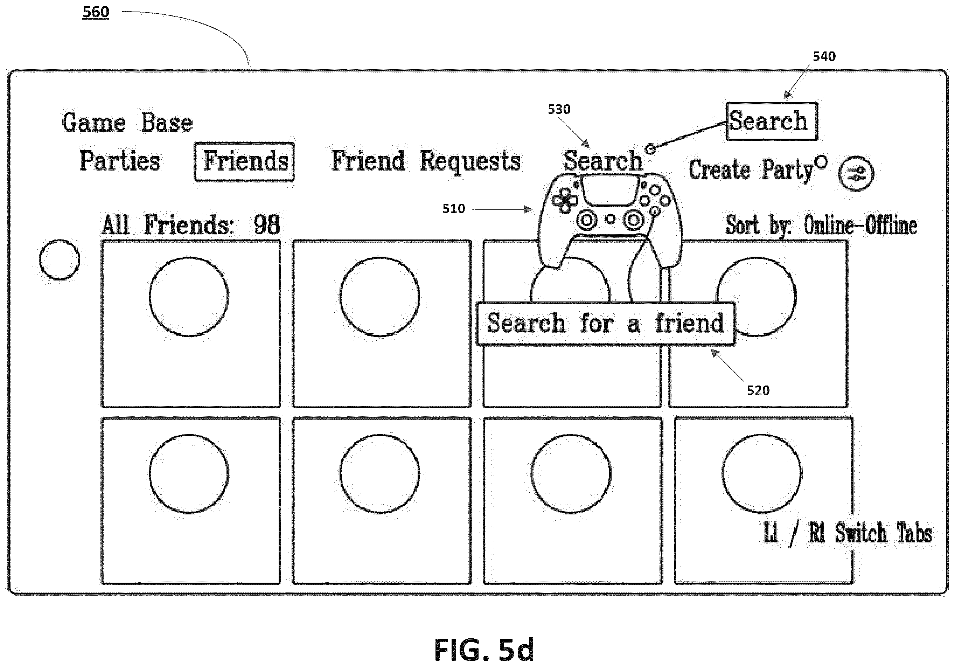

In FIG. 5d, selection of a newly exposed navigation item 535 may update a display to provide a new display related to the selected sub-menu item, such as a "Friends" dashboard 560. In one embodiment, the personalized onboarding assistant system 170 may provide assistance content regarding search for peers of a user to add as "Friends". Again, the personalized onboarding assistant system 170 may provide a call-out highlight 540 by drawing a line from a navigation item 530 to an image of the same navigation item in an increased size and resolution. Further, the personalized onboarding assistant system 170 may adjust position and size of a controller input diagram 510 to avoid obstructing navigation items. The personalized onboarding assistant system 170 may adjust the position of a controller input diagram 510 to within proximity of the required navigation item, further drawing the attention of a user to the correct location on-screen. Tutorial text 520 may be updated by the personalized onboarding assistant system 170 to provide appropriate instruction for highlighting and selecting the "Search" navigation item.

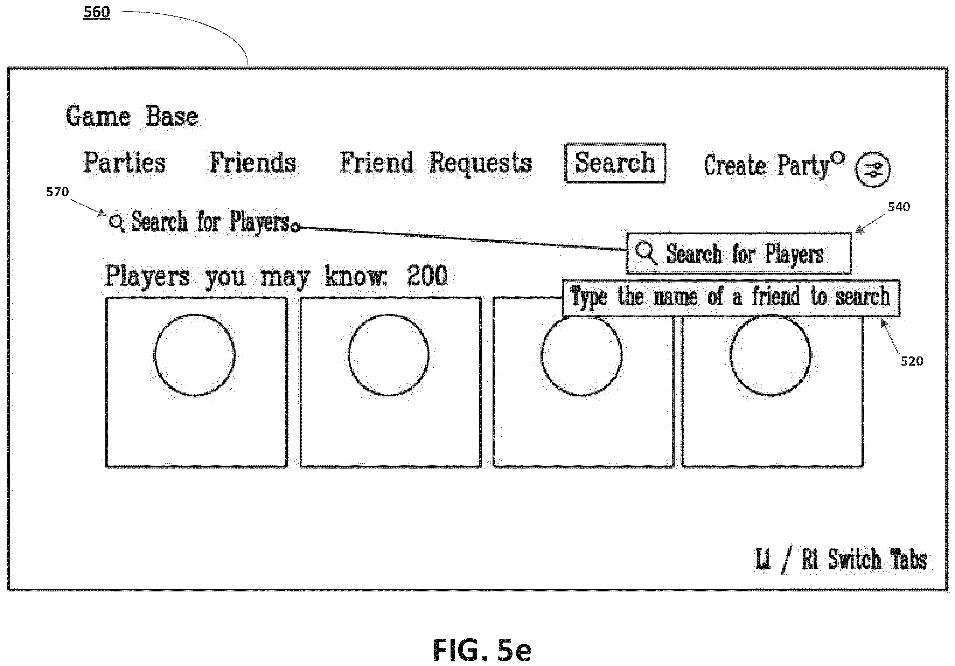

In FIG. 5e, a "Friends" dashboard 560 may be updated to display a "Search" feature 570 associated with locating peers of a user to add as "Friends". The personalized onboarding assistant system 170 may highlight the "Search" feature 570 with a call-out 540. Further, the personalized onboarding assistant system 170 may update tutorial text 520 with instructions guiding a user to input text of a peer profile name, network ID, or other unique identifier associated with a user profile. Various embodiments for inputting text may be provided to a user. In one embodiment, a user may select a "Search" feature 570 and may input text using an on-screen keyboard, a physical keyboard attached to a controller user device 130, or a stand-alone physical keyboard connected to an entertainment system as a second user device 130 separate from a controller input device. In a different embodiment, a user may input text by speaking into a microphone sensor located on a controller or on an entertainment system. Upon text input being received, the personalized onboarding assistant system 170 may update tutorial text 520 to provide assistance to guide a user to confirm initiation of the search process based on text received.

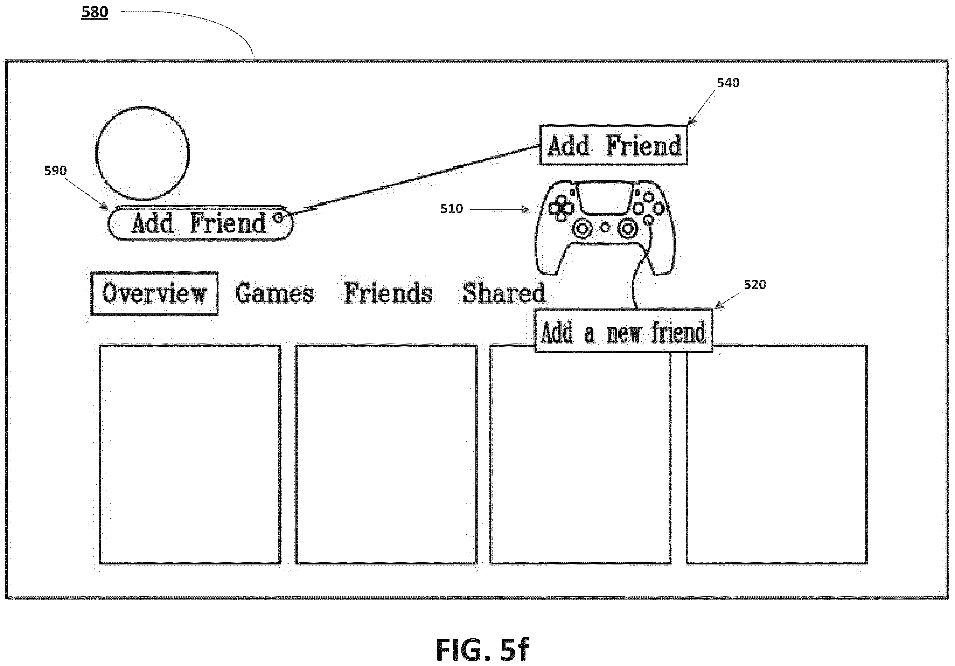

In FIG. 5f, a peer user profile 580 is displayed based on the search result queried by the personalized onboarding assistant system 170 using search text input by a user in FIG. 5e. A peer user profile 580 may display information related to a peer, such as activity and media content of a peer, peers of a peer, and a list of activity and media content both a user and a peer have in common. Peer user profile information may be reviewed by a user to identify an intended peer has been located to add as a "Friend." The personalized onboarding assistant system 170 may highlight an "Add Friend" feature 590 with a call-out 540. Further, the personalized onboarding assistant system 170 may update a controller input diagram 510 and tutorial text 520 with instructions guiding a user to confirm the request to add a peer as a "Friend". Upon user input to add a peer as a "Friend", the personalized onboarding assistant system 170 may detect the activity as completed and may exit the assistance. Further, the personalized onboarding assistant system 170 may continue to provide different assistance to a user after a first assistance for adding a peer is complete.

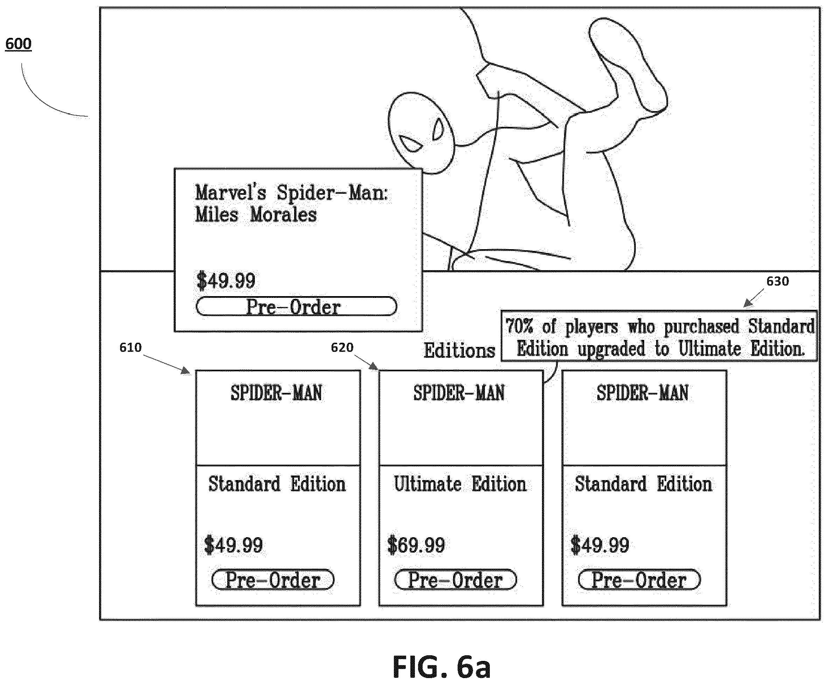

FIG. 6a-6b illustrate exemplary screenshots that may be provided during use of a system for providing personalized onboarding assistance in relation to purchasing media content from an online store. The personalized onboarding assistant system 170 may provide guided assistance to a user related to accessing and searching an online store in a process similar to steps included in FIG. 5a-5f. In FIG. 6a, A user may select a new media content from an online store based on a search result queried by the personalized onboarding assistant system 170, and a media content purchase page 600 may be displayed. The personalized onboarding assistant system 170 may track user input on a media content purchase page 600 to provide recommendations in advance of a final purchase being executed by a user. In the displayed embodiment, a user may initially select a first version of a media content item 610 with the intention to purchase the version, such as a "Standard Edition" of a video game. The personalized onboarding assistant system 170 may provide assistance to a user by highlighting a second version of a media content item 620 and displaying recommendation text 630 suggesting a user purchase the second version of a media content item 620. Recommendation text 630 may include a variety of information related to a version of a media content item based on data available to the personalized onboarding assistant system 170 via interactive content servers 110, platform servers 120, databases 140, or any cloud server connected to an entertainment system network. In the displayed embodiment, the personalized onboarding assistant system 170 may receive data for a media content item indicating a second version 620 is a more popular choice across users of a network than a first version 610. Recommendation text 630 may incorporate a data point to explain the version recommendation based on popularity, such as "70% of players who purchased Standard Edition upgraded to Ultimate Edition".

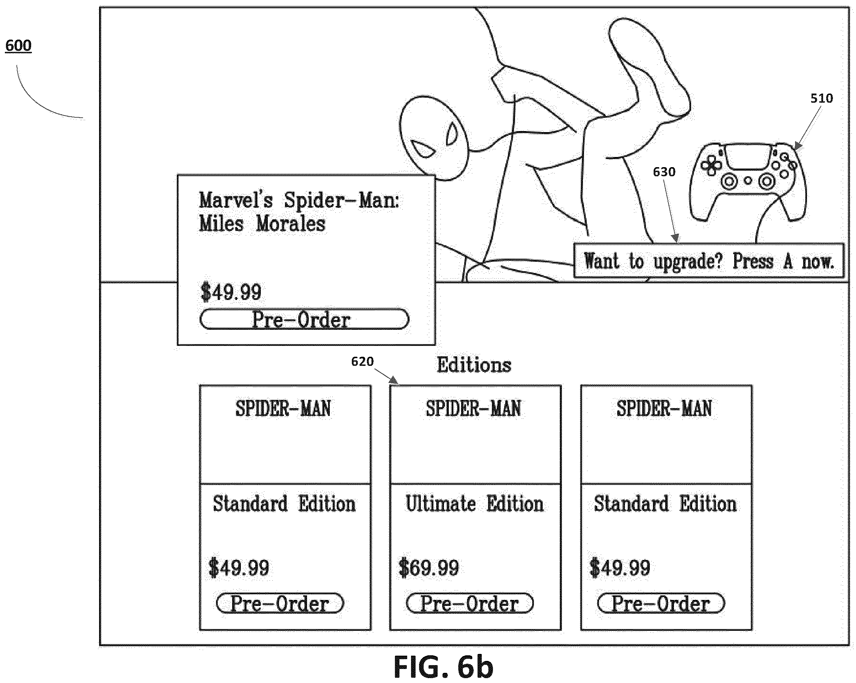

In FIG. 6b, the personalized onboarding assistant system 170 may provide further recommendation assistance by displaying a shortcut input guide to a user for selecting a recommended version of a media content item. A shortcut input for a recommended media content purchase provided by the personalized onboarding assistant system 170 may skip steps in a traditional purchase process that a user may be required to perform when selecting a media content item, reducing time spent by a user and the number of inputs required to navigate to the selection. Upon displaying a recommendation to a user on a media content purchase page 600, such as a recommendation displayed in FIG. 6a, the personalized onboarding assistant system 170 may update a display to include input assistance in completing the purchase of a recommended second version 620. The personalized onboarding assistant system 170 may provide a controller input diagram 510 displaying button placements and input required to select a second version 620. Further, the personalized onboarding assistant system 170 may provide updated recommendation text 630 that describes an input required to select the recommended version.

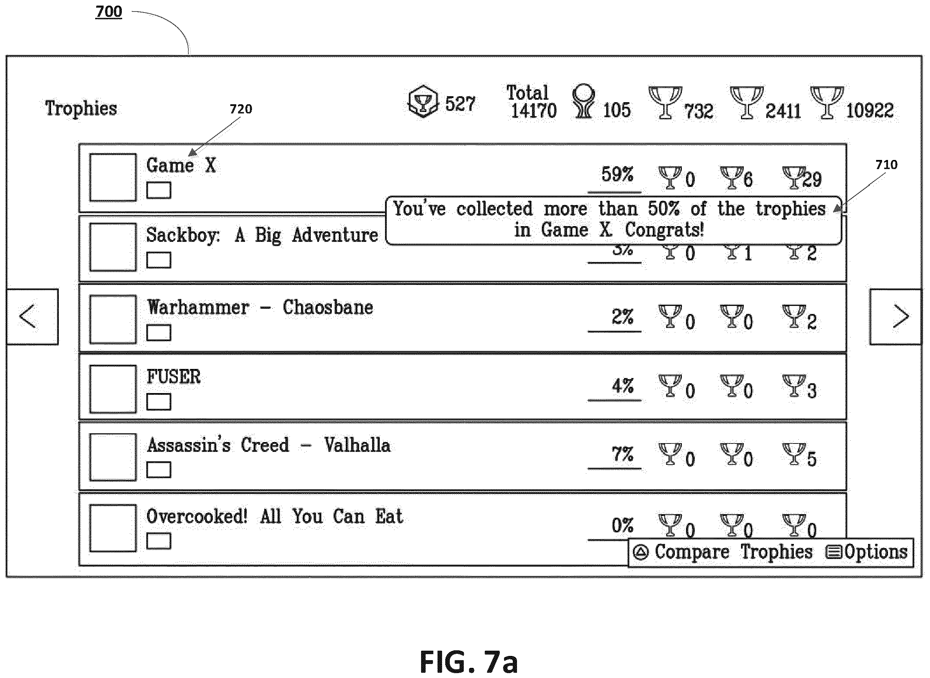

FIG. 7a-7b illustrate exemplary screenshots that may be provided during use of a system for providing personalized onboarding assistance in relation to making recommendations of new media content based on media content in a library of a user. The personalized onboarding assistant system 170 may provide feedback and recommendations to a user based on user profile information including a history of engagement with media content and activities in a library of a user. In FIG 7a, a user may browse a library of media content a user has interacted with previously, such as a list of games, movies, television shows, podcasts, and publisher content or any combination therein. In the displayed embodiment, a user may browse a library of video games 700 and a user history associated with each game, such as a "Trophies" list, which may include a measurement of user progression towards completion of feats in a game. In one example, the personalized onboarding assistant system 170 may determine a recommendation should be provided to a user based on a history of engagement and progression in a game. A feedback notification 710 may be displayed by the personalized onboarding assistant system 170, informing the user of a history of engagement and progression in a specific game 720, and praising a user for feats achieved in a game. Providing feedback to a user for engagement with media content in a user library may be displayed by the personalized onboarding assistant system 170 as a preliminary step intended to provide context to a user for the basis of a recommendation.

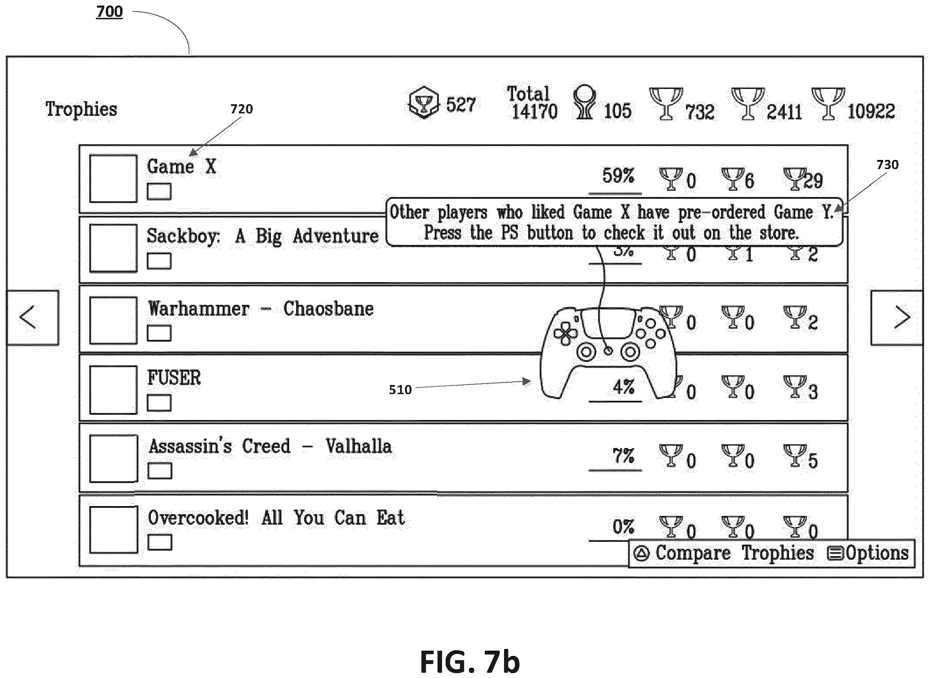

In FIG. 7b, the personalized onboarding assistant system 170 may provide a recommendation for a user to engage in a new media content item based on user engagement in similar media content in a user library. Media content in a user library may be similar to new media content by the personalized onboarding assistant system 170 based on comparing a variety of factors, such as media metadata, global purchase history, purchase history of peers of a user, and engagement history of a user and peers of a user in the same. Upon detecting a new media content item available that is similar to a user media content library, and the personalized onboarding assistant system 170 may provide assistance in guiding a user to engage in the new media content item. In the displayed embodiment, a specific game 720 in a library of video games 700 may be similar to a new media content item by the personalized onboarding assistant system 170. Upon detection of a new media content item available for a user, the personalized onboarding assistant system 170 may provide recommendation text 730 that includes a prompt or input shortcut to view more information about the new media content. Further, the personalized onboarding assistant system 170 may provide a controller input diagram 510 in cooperation with recommendation text 730 that guides a user to button inputs which may allow a user to view more information about a recommended media content.

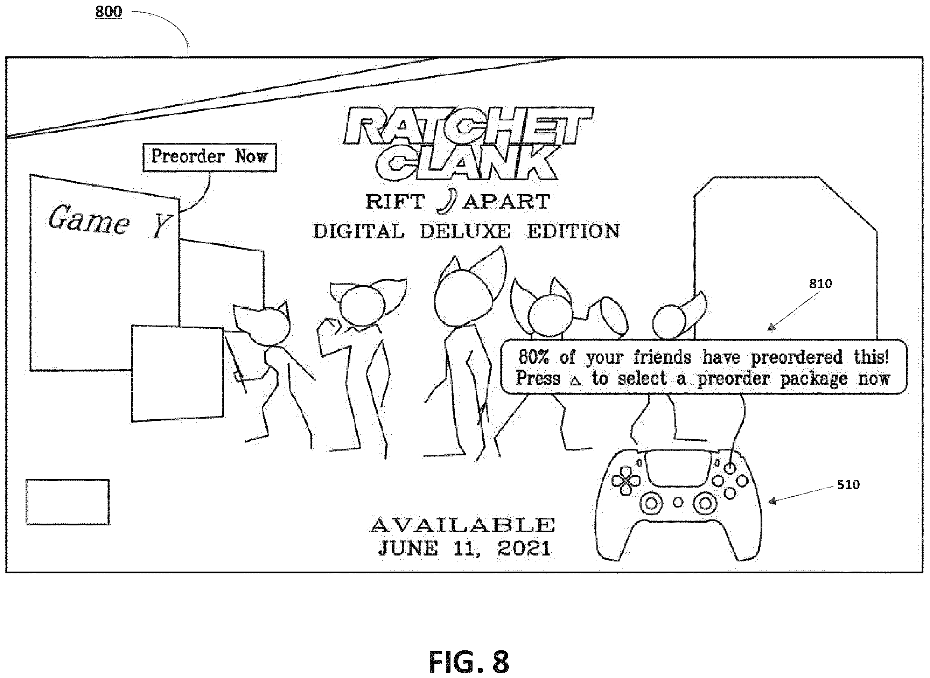

FIG. 8 illustrate exemplary screenshots that may be provided during use of a system for providing personalized onboarding assistance in relation to making recommendations of new media content based on purchase history of peers of a user. The personalized onboarding assistant system 170 may provide a recommendation to a user based on media content purchase history of peers of a user during engagement with on an entertainment system, such as searching an online store, browsing media content in an online store, or viewing a specific media content item in an online store. Such recommendation assistance provided to a user by the personalized onboarding assistant system 170 may include displaying message text incorporating data available in user profiles of peers of a user on a network. In the displayed embodiment, a user may select a title of a game while browsing or searching an online store and may view the purchase page 800 of a game. The personalized onboarding assistant system 170 may detect peers of a user that have also purchased the same media content, and may display a peer recommendation message 810 incorporating data from purchase profiles of peers of a user, such as a message stating "80% of your friends have preordered this". Further, the personalized onboarding assistant system 170 may provide a controller input diagram 510 in cooperation with a peer recommendation message 810, guiding a user to an input shortcut for purchasing a recommended media content.

The foregoing detailed description of FIG. 3-8 represent exemplary embodiments of the personalized onboarding assistant system 170 providing assistance to a user for various activities that a user may interact with on an entertainment system and may be initiated under a variety of circumstances. The personalized onboarding assistant system 170 may provide similar assistance in a variety of additional user interactions with an entertainment system, and as such, FIG. 3-8 should in no way be considered exhaustive or limiting in the capabilities of the personalized onboarding assistant system 170. The disclosed embodiments have been selected as to best represent the technology, practical implementation, and application of the described system.

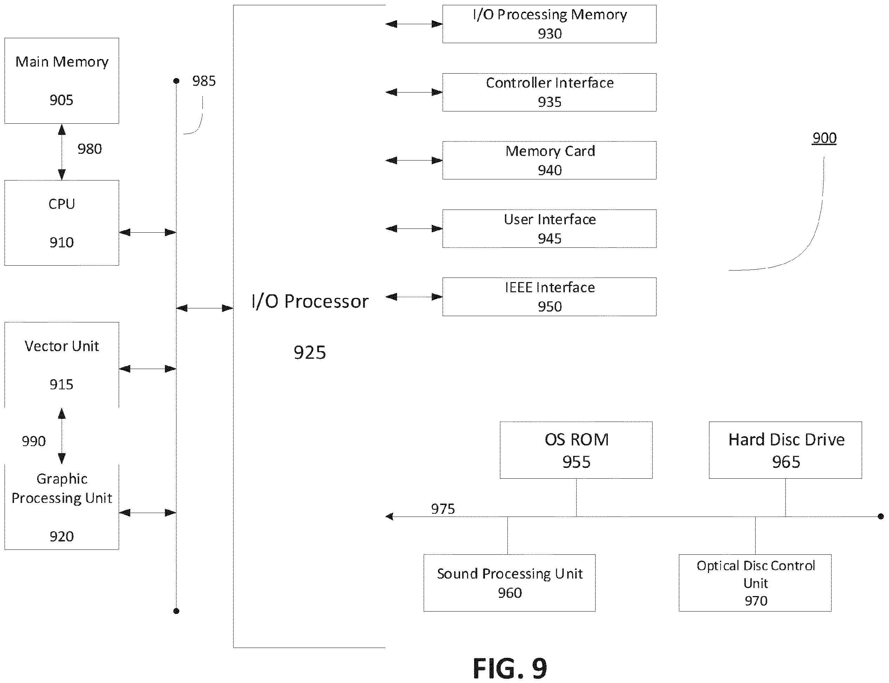

FIG. 9 is a block diagram of an exemplary electronic entertainment system 900. The entertainment system 900 of FIG. 9 includes a main memory 905, a central processing unit (CPU) 910, vector unit 915, a graphics processing unit 920, an input/output (I/O) processor 925, an I/O processor memory 930, a controller interface 935, a memory card 940, a Universal Serial Bus (USB) interface 945, and an IEEE interface 950. The entertainment system 900 further includes an operating system read-only memory (OS ROM) 955, a sound processing unit 960, an optical disc control unit 970, and a hard disc drive 965, which are connected via a bus 975 to the I/O processor 925.

Entertainment system 900 may be an electronic game console. Alternatively, the entertainment system 900 may be implemented as a general-purpose computer, a set-top box, a hand-held game device, a tablet computing device, or a mobile computing device or phone. Entertainment systems may contain more or less operating components depending on a particular form factor, purpose, or design.

The CPU 910, the vector unit 915, the graphics processing unit 920, and the I/O processor 925 of FIG. 9 communicate via a system bus 985. Further, the CPU 910 of FIG. 6 communicates with the main memory 905 via a dedicated bus 980, while the vector unit 915 and the graphics processing unit 920 may communicate through a dedicated bus 990. The CPU 910 of FIG. 9 executes programs stored in the OS ROM 955 and the main memory 905. The main memory 905 of FIG. 9 may contain pre-stored programs and programs transferred through the I/O Processor 925 from a CD-ROM, DVD-ROM, or other optical disc (not shown) using the optical disc control unit 970. I/O Processor 925 of FIG. 9 may also allow for the introduction of content transferred over a wireless or other communications network *(e.g.,* 4G, LTE, 3G, and so forth). The I/O processor 925 of FIG. 9 primarily controls data exchanges between the various devices of the entertainment system 900 including the CPU 910, the vector unit 915, the graphics processing unit 920, and the controller interface 935.

The graphics processing unit 920 of FIG. 9 executes graphics instructions received from the CPU 910 and the vector unit 915 to produce images for display on a display device (not shown). For example, the vector unit 915 of FIG. 9 may transform objects from three-dimensional coordinates to two-dimensional coordinates, and send the two-dimensional coordinates to the graphics processing unit 920. Furthermore, the sound processing unit 960 executes instructions to produce sound signals that are outputted to an audio device such as speakers (not shown). Other devices may be connected to the entertainment system 900 via the USB interface 945, and the IEEE interface 950 such as wireless transceivers, which may also be embedded in the system 900 or as a part of some other component such as a processor.

A user of the entertainment system 900 of FIG. 9 provides instructions via the controller interface 935 to the CPU 910. For example, the user may instruct the CPU 910 to store certain game information on the memory card 940 or other non-transitory computer-readable storage media or instruct a character in a game to perform some specified action.

The system may be implemented in an application that may be operable by a variety of end user devices. For example, an end user device may be a personal computer, a home entertainment system *(e.g.,* Sony PlayStation2^{®} or Sony PlayStation3^{®} or Sony PlayStation4^{®}, or Sony PlayStation5^{®}), a portable gaming device *(e.g.,* Sony PSP^{®} or Sony Vita^{®}), or a home entertainment system of a different albeit inferior manufacturer. The present methodologies described herein are fully intended to be operable on a variety of devices. The system may also be implemented with cross-title neutrality wherein an embodiment of the present system may be utilized across a variety of titles from various publishers.

The present system may be implemented in an application that may be operable using a variety of devices. Non-transitory computer-readable storage media refer to any medium or media that participate in providing instructions to a central processing unit (CPU) for execution. Such media can take many forms, including, but not limited to, non-volatile and volatile media such as optical or magnetic disks and dynamic memory, respectively. Common forms of non-transitory computer-readable media include, for example, a floppy disk, a flexible disk, a hard disk, magnetic tape, any other magnetic medium, a CD-ROM disk, digital video disk (DVD), any other optical medium, RAM, PROM, EPROM, a FLASHEPROM, and any other memory chip or cartridge.

Various forms of transmission media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU. Various forms of storage may likewise be implemented as well as the necessary network interfaces and network topologies to implement the same.

The foregoing detailed description of the technology has been presented for purposes of illustration and description. It is not intended to be exhaustive or to limit the technology to the precise form disclosed. Many modifications and variations are possible in light of the above teaching. The described embodiments were chosen in order to best explain the principles of the technology, its practical application, and to enable others skilled in the art to utilize the technology in various embodiments and with various modifications as are suited to the particular use contemplated. It is intended that the scope of the technology be defined by the claim.

## Claims

1. A method for personalizing assistance in virtual environments, the method comprising:
storing a user profile in memory, wherein the user profile includes data regarding a interaction by a user with one or more media titles;
detecting an assistance trigger associated with the user of a entertainment device configured to communicate over a communication network, wherein the assistance trigger is detected during interaction by the user with an identified one of the media titles;
identifying an activity associated with the assistance trigger based on the interaction by the user with identified media title when the assistance trigger was detected;
customizing assistance content associated with the identified activity, wherein the assistance content is customized based on the user profile; and
providing the customized assistance content over the communication network to the entertainment device for presentation within a virtual environment associated with the identified media title.

2. The method of claim 1, further comprising updating the user profile based on the customized assistance content.

3. The method of claim 2, wherein customization of assistance content in response to a subsequent assistance trigger is based on the updated user profile.

4. The method of claim 1, wherein detecting an assistance trigger is based on data from the user profile indicating any prior engagement with the entertainment device or the identified media title.

5. The method of claim 1, wherein customizing the assistance content includes filtering a set of content associated with the identified activity based on the user profile.

6. The method of claim 1, wherein customizing the assistance content includes configuring a set of content associated with the identified activity based on the user profile, the customized assistance content being configured for presentation within the virtual environment of the identified media title.

7. The method of claim 1, wherein the customized assistance content includes a visual simulation of one or more controller button presses associated with success in completing the activity.

8. The method of claim 1, further comprising suspending presentation of the customized assistance content and providing different assistance content in response to a user request.

9. The method of claim 1, further comprising terminating presentation of the customized assistance content in response to a user request, and storing the user request in the user profile.

10. The method of claim 8, further comprising
detecting another assistance trigger associated with the identified activity; and
resuming presentation of the customized assistance content based on the other detected assistance trigger.

11. The method of claim 1, wherein the assistance trigger includes one or more indicators of user frustration, accessing an online store of media titles from the entertainment device, searching for one or more media titles in an online store, or searching for a new media title that is absent from the user profile.

12. The method of claim 1, wherein customizing the assistance content is further based on a version of the new media title based on a global purchase history and one or more purchase histories of peers of the user.

13. The method of claim 1, further comprising identifying a skill level based on the interaction with the identified media title, wherein customizing the assistance content is further based on the identified skill level.

14. A system for personalizing assistance in virtual environments, the system comprising:
memory that stores a user profile, wherein the user profile includes data regarding a interaction by a user with one or more media titles;
a processor that executes instructions stored in memory, wherein the processor executes the instructions to:
detect an assistance trigger associated with the user of the entertainment device configured to communicate over a communication network, wherein the assistance trigger is detected during interaction by the user with an identified one of the media titles,
identify an activity associated with the assistance trigger based on the interaction by the user with identified media title when the assistance trigger was detected, and
customize assistance content associated with the identified activity, wherein the assistance content is customized based on the user profile; and
a communication network that communicates over the communication network to provide the customized assistance content to the entertainment device for presentation within a virtual environment associated with the identified media title.

15. A non-transitory computer-readable storage medium, having embodied thereon a program executable by a processor to perform a method for personalizing assistance in virtual environments, the method comprising:
storing a user profile in memory, wherein the user profile includes data regarding a interaction by a user with one or more media titles;
detecting an assistance trigger associated with the user of the entertainment device configured to communicate over a communication network, wherein the assistance trigger is detected during interaction by the user with an identified one of the media titles;
identifying an activity associated with the assistance trigger based on the interaction by the user with identified media title when the assistance trigger was detected;
customizing assistance content associated with the identified activity, wherein the assistance content is customized based on the user profile; and
providing the customized assistance content over the communication network to the entertainment device for presentation within a virtual environment associated with the identified media title.
